# DEMANDE DE BREVET EUROPEEN

(11) **EP 1 560 368 A1**
(43) Date de publication de la demande: **03.08.2005**
(21) Numéro de dépôt: 04290246.0
(22) Date de dépôt: 30.01.2004
(51) Int. Cl.: H04L 12/28

(54) **Procédé d'établissement d'une session multimédia entre un équipement appelant et un équipement appelé d'un réseau du type à sous domaine multimédia et système de communication mettant en oeuvre ce procédé**

(71) Demandeur: FRANCE TELECOM, 75015 Paris (FR)
(72) Inventeur: Martiquet, Nicolas, 75015 Paris (FR); Khalil, Toufic, 75014 Paris (FR); Nguyen, Kim Anh Vu, 92260 Fontenay aux roses (FR)
(74) Mandataire: Joly, Jean-Jacques

(57) **Abrégé**

Procédé d'établissement d'une session multimédia entre un équipement de télécommunication appelant et un équipement appelé qui est un équipement mobile d'un réseau du type à sous domaine multimédia, dans lequel :
- on émet à partir du premier équipement (UE1) d'utilisateur une invitation (Invite) à établir une session multimédia, qui comporte comme adresse de destination une identité publique du deuxième équipement ;
- cette invitation étant transmise :
   - par le premier équipement (UE1) à un premier serveur Proxy (P-CSF1) puis,
   - de ce premier serveur Proxy, à un premier serveur de contrôle de session (S-CSF1) du réseau dans lequel le premier équipement (UE1) est enregistré, et
   - de ce premier serveur de session (S-CSF1), à un serveur de point d'entrée (I-CSCF2) du réseau correspondant à l'adresse de destination du deuxième équipement (UE2),
      - ce serveur de point d'entrée (I-CSCF2) interroge une base (HSS2) du réseau du deuxième équipement (UE2) pour obtenir l'adresse d'un serveur de contrôle de session(S-CSF2), responsable dudit deuxième équipement (UE2),
      - lorsque ledit deuxième équipement (UE2) est enregistré dans ladite base :
         - ledit serveur de point d'entrée (I-CSCF2) transmet le message d'invitation vers le serveur de session (SCSCF2) sélectionné, et
         - ledit serveur de session (SCSCF2) transmet le message d'invitation vers un serveur Proxy (P-CSCF2) correspondant au deuxième équipement :
            caractérisé en ce que :
            - le serveur Proxy (P-CSCF2) transmet ce message d'invitation, en l'encapsulant dans un paquet IP, vers le deuxième équipement, via un noeud de transit (GGSN) approprié.

## Description

La présente invention est relative à un procédé d'établissement d'une session multimédia entre un équipement de télécommunication appelant et un équipement appelé qui est un équipement mobile d'un réseau supportant le sous-domaine multimédia tel que défini par le 3GPP.

Ce réseau est avantageusement - mais non limitativement - un réseau de type UMTS.

### 1. DOMAINE GENERAL DE L'INVENTION :

### L'INTRODUCTION DU SOUS-DOMAINE MULTIMEDIA

### 1.1-Introduction sur l'IMS (« IP Multimedia Subsystem » ou sous-domaine multimédia)

### 1.1.1-Architecture

La grande nouveauté de la version 5 de la norme 3GPP (« release 5 ») est l'introduction du sous-domaine IP Multimédia (IP Multimedia Subsystem - IMS). Ce sous-domaine permet de contrôler des sessions multimédia négociées de bout en bout entre deux clients sur le réseau coeur paquet défini par le 3GPP.

On décrit ci-dessous le procédé d'établissement d'une session multimédia entrante d'un premier équipement UE1 de télécommunication mobile d'utilisateur vers un deuxième équipement UE2 de télécommunication mobile d'utilisateur, mis en oeuvre à l'aide du sous-domaine IP Multimédia IMS, également désigné ci-après par réseau externe de signalisation IP ou domaine IMS, IP signifiant bien entendu « protocole Internet ». Par ailleurs, le réseau de l'opérateur mobile chez lequel le client est abonné est désigné par « réseau nominal ».

Il est fait référence à cet égard aux documents « 3GPP TS 23.228 V6.4.1 (2004-01), 3rd Generation Partnership Project; Technical Specification Group Services and System Aspects; IP Multimedia Subsystem (IMS) ; Stage 2 (Release 6)», disponible à l'adresse Internet http://www.3gpp.org/ftp/specs/archive/23_series/23.228/, et au document RFC3261 du groupe de travail IETF (groupe de travail sur le réseau Internet, ou Internet Engineering Task Force), disponible à l'adresse Internet http://www.ietf.org/rfc.

On suppose que l'équipement UE1 est apte à communiquer avec un premier réseau de télécommunication. Cet équipement UE1 peut être n'importe quel équipement, fixe ou mobile, supportant le protocole SIP défini par le RFC 3261 et connecté à un réseau IP. On suppose également dans le cas le plus général que l'autre équipement UE2 communique par un deuxième réseau de télécommunication mobile, qui est différent du premier réseau, tout en sachant bien entendu que ce pourrait être le même. Le deuxième réseau est par exemple à commutation de paquets PS, et par exemple du type GPRS ou UMTS.

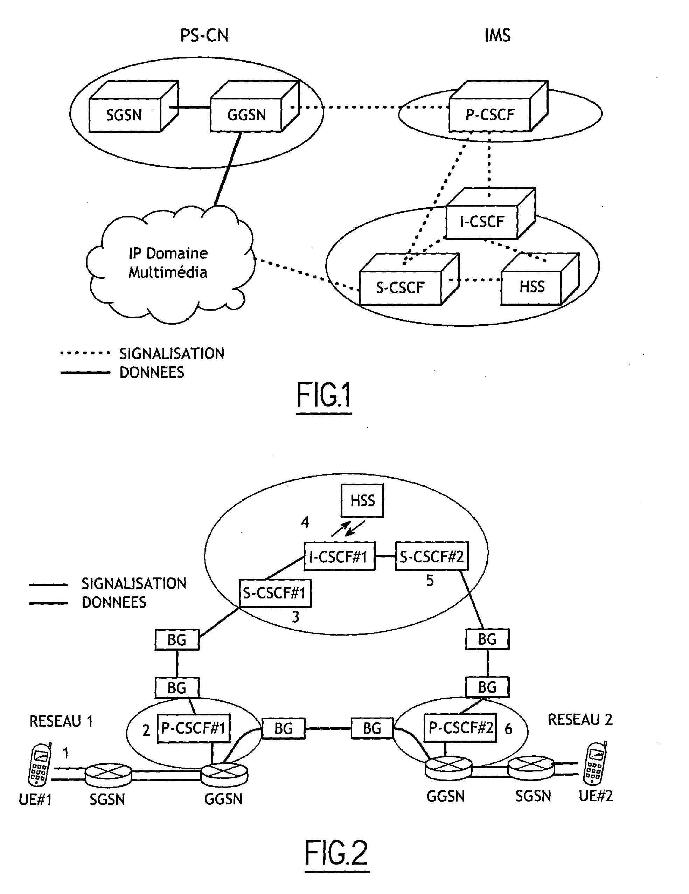

Ainsi que l'illustre la figure 1, le réseau de télécommunication mobile auquel est rattaché l'équipement UE2 comporte :
- des noeuds de service de transit, qui sont, dans le cas du GPRS et de l'UMTS, appelés GGSN (en anglais : Gateway GPRS Support Node), qui assurent le passage dans les deux sens des données entre le réseau et le réseau externe IMS de signalisation IP, par exemple selon un protocole TCP-IP ;
- dans le cas du GPRS et de l'UMTS, des noeuds SGSN de support de service (en anglais : Serving GPRS Support Node) qui sont associés à des stations de base et qui gèrent entre autres le lien de communication mobile desservant l'équipement UE2 et qui assurent la communication entre l'équipement UE2 et le noeud GGSN de service de transit.

Le domaine IMS permet de contrôler des sessions multimédia entre les premier et deuxième équipements UE1 et UE2 et gère la signalisation de contrôle d'appel selon le protocole SIP (en anglais : Session Initiation Protocol).

L'architecture du domaine IMS repose sur un certain nombre de concepts fondamentaux:
- Le plan de données et le plan de contrôle sont séparés.
- L'IMS repose intégralement sur le domaine paquet (PS - Packet Switched) pour assurer ses fonctions.
- Le domaine IMS gère la signalisation de contrôle d'appel (SIP) tandis que le domaine PS gère l'accès au réseau et le transport.
- Les services Internet existants peuvent continuer à opérer, sans IMS, à travers les noeuds GSNs du domaine paquet.

### 1.1.2- Les différentes entités du domaine IMS

Chaque domaine IMS comporte les entités suivantes pour mettre en oeuvre la fonction de contrôle de session d'appel CSCF (en anglais : Call Session Control Function) :
- des serveurs mandataires de contrôle de session P-CSCF (en anglais : Proxy - Call Session Control Function), qui sont les premiers points de contact des équipements UE1, UE2 de télécommunication mobile d'utilisateur dans le domaine IMS pour les sessions sortantes, et jouent le rôle de relais entre les équipements et le serveur S-CSCF. Leurs fonctions sont la diffusion des messages de signalisation de et vers le S-CSCF du réseau nominal, la gestion des appels d'urgence locaux, l'allocation de ressources durant l'établissement de la session, la compression des messages SIP vers les équipements UE1, UE2, l'analyse d'adresses ou la traduction de numéros avant de passer des requêtes, la génération des CDRs (« Call Data Record » en anglais, information pour la facturation).
- des serveurs S-CSCF de contrôle de session (en anglais : Serving - Call Session Control Function), qui effectuent le contrôle de la session et des services pour l'équipement UE1, UE2 tant qu'il est enregistré. Le serveur S-CSCF gère et maintient l'état d'une session. Ses principales fonctions sont l'enregistrement pour l'utilisateur avant l'établissement des sessions, la responsabilité du contrôle de la session en traitant la signalisation d'appel / session provenant de l'équipement, l'interaction avec la zone de contrôle de services (en anglais : Service Control Area), qui contient les applications d'un réseau tiers ou d'un fournisseur de services, le retrait du profil de l'utilisateur stocké dans un serveur HSS durant la phase d'enregistrement de l'utilisateur, la générations des CDR.
- des serveurs d'interrogation I-CSCF (en anglais : Interrogating - Call Session Control Function), qui sont les premiers points de contact des équipements UE1, UE2 de télécommunication mobile d'utilisateur dans le domaine IMS pour les sessions entrantes. Ses principales fonctions sont la sélection du serveur de contrôle S-CSCF lors de la procédure d'enregistrement, l'interrogation du serveur HSS pour obtenir l'adresse du serveur de contrôle S-CSCF sous lequel est localisé l'utilisateur, la transmission des messages SIP vers le serveur de contrôle S-CSCF, l'intégration des fonctions pare-feu pour remplir les exigences de sécurité et de confidentialité, la génération des CDR et le partage de charge entre les serveurs de contrôle S-CSCF.
- le serveur HSS d'abonnés (en anglais: Home Subscriber Server) ou base de données de souscription de services, qui est la base de données principale pour un utilisateur donné et contient les informations liées à sa souscription. En plus de son support des interfaces/fonctionnalités existantes de l'enregistreur de localisation du réseau nominal HLR (en anglais : Home Location Register), la base HSS fait une interface avec les serveurs S-CSCF de contrôle et les serveurs d'interrogation I-CSCF, et maintient plusieurs informations, dont l'identification de l'utilisateur, les informations de sécurité propres à l'usager, la localisation de l'utilisateur, le profil de l'utilisateur (services, ...).

### 1.1.3- Enregistrement dans le domaine IMS

Le domaine IMS a été conçu pour permettre à deux utilisateurs d'établir dynamiquement une session multimédia entre les deux terminaux UE1 et UE2, pour échanger des données qui peuvent être en temps réel ou non. Avant d'établir une session multimédia, les équipements des utilisateurs doivent être enregistrés auprès du domaine IMS. Cet enregistrement permet entre autres au S-CSCF de pouvoir contacter l'équipement de l'utilisateur lorsque cela est nécessaire.

On suppose que le premier équipement UE2 d'utilisateur est enregistré auprès d'un premier serveur S-CSCF1 de contrôle de session du premier réseau IMS de signalisation IP.

Les différentes étapes ayant mené à cet enregistrement auprès du domaine IMS sont successivement les suivantes :
- attachement et authentification dans le premier réseau de télécommunication mobile : quand un équipement mobile UE2 veut utiliser les services du réseau, il doit s'attacher auprès d'un noeud SGSN1 de support de service de celui-ci. Pour ce faire, l'équipement UE2 active une procédure d'attachement (en anglais : GPRS Attach), en envoyant au noeud SGSN1 de support de service un message incluant le numéro IMSI de l'équipement UE2, numéro désigné ci-après par IMSI1, le numéro IMSI1 étant l'identité internationale IMSI de l'abonné mobile. Le noeud SGSN1 utilise ce numéro IMSI1 pour récupérer par une interface Gc auprès de la base HSS2 du réseau nominal IMS2 les données qu'il utilisera pour authentifier l'équipement UE2. A la fin de cette procédure, l'équipement UE2 est authentifié et attaché au noeud SGSN1 de support de service et sa position géographique est connue, une association logique existant alors entre l'équipement UE2 et le noeud SGSN1 de support de service, le noeud SGSN1 de support de service desservant alors l'équipement UE2. L'association entre l'adresse IP du noeud SGSN1 et le numéro IMSI de UE2 est enregistrée dans la base HSS1 lors de la procédure d'attachement de l'équipement UE2.
- activation d'un canal de communication (en anglais : PDP-Context pour Packet Data Protocol Context, qui peut être traduit par contexte d'échanges de données en mode paquet et qui est appelé dans ce qui suit « canal de communication ») : ce canal de communication peut être considéré comme un tunnel permettant à l'équipement mobile UE2 de transmettre des données sur un réseau IP externe (c'est-à-dire l'Internet). Ce canal va être utilisé pour la transmission de la signalisation à destination du domaine IMS2. Pour cela, un nouveau type de canal a été introduit pour faire la distinction entre le trafic de signalisation et le trafic de données. Ce canal, dit de signalisation et désigné ci-après par le signe de référence PDP1, est restreint exclusivement à la signalisation et possède des caractéristiques spéciales de qualité de service. Pour établir ce canal PDP1, le noeud SGSN1 de support de service choisit un noeud GGSN de service de transit approprié du réseau, désigné ci-après par noeud GGSN2 de service de transit. Le canal PDP1 s'étend entre le noeud SGSN1 et le noeud GGSN1 et représente l'association entre les noeuds SGSN1 et GGSN1 pour UE2, enregistrée sous la forme d'un contexte PDP. L'activation du canal PDP1 pour UE2 active une adresse IP pour UE2, soit IP1, associée aux noeuds SGSN1 et GGSN1.
- découverte du serveur mandataire P-CSCF1 de contrôle de session et récupération de son adresse IP par l'équipement UE2. Deux méthodes peuvent être utilisées pour ce faire :
   -- l'équipement utilise un serveur DHCP (en anglais : Dynamic Host Configuration Protocol ou protocole de configuration d'hôte dynamique) pour obtenir le nom de domaine du P-CSCF2, puis un serveur DNS de noms de domaine pour récupérer l'adresse IP de ce serveur mandataire P-CSCF1 de contrôle de session.
   -- l'adresse IP d'un P-CSCF est demandée lors de l'activation du canal PDP1. Le noeud GGSN1 envoie dans son message de retour l'adresse IP du serveur mandataire P-CSCF1 de contrôle de session à l'équipement UE2.
- l'enregistrement de l'équipement mobile UE2 dans le réseau nominal IMS1 : l'équipement mobile UE2 envoie le message SIP nécessaire à l'enregistrement au serveur mandataire P-CSCF1, ce message d'enregistrement contenant l'identité publique SIP1, l'identité privée, ainsi que l'identité IP1 de l'équipement UE2 et le nom de domaine dans le réseau nominal IMS1. Le serveur mandataire P-CSCF1 enregistre alors cette identité IP1 de UE2.

Le serveur mandataire P-CSCF1 examine alors le nom de domaine pour déterminer le serveur I-CSCF d'interrogation dans le réseau nominal IMS1 et lui transmettre le message d'enregistrement.

Le serveur I-CSCF d'interrogation transmet à la base HSS du réseau nominal IMS2 une requête Cx d'autorisation d'utilisateur (en anglais : Cx User Authorization Request message ou Cx Query) contenant l'identité (publique et privée) de l'équipement UE2 et le nom de domaine dans le réseau nominal IMS1. La base HSS détermine à partir de cette requête Cx et des données de souscription associées à l'identité de UE2, si l'utilisateur de UE2 est déjà enregistré et s'il est autorisé à être enregistré, et envoie une réponse correspondant à la requête Cx au serveur I-CSCF, cette réponse contenant le nom du S-CSCF si celui-ci est connu de la base HSS. Si la réponse ne contient pas le nom d'un S-CSCF, le serveur I-CSCF envoie, dans un requête Cx de sélection (en anglais : Cx Select Pull), l'identité publique et privée de UE2 à la base HSS pour lui demander l'information sur les capacités requises du serveur S-CSCF de contrôle de session requis pour cet équipement UE2. A partir de l'information fournie par la base HSS dans la réponse à cette requête (Cx Select Pull Resp), le serveur I-CSCF sélectionne un serveur S-CSCF1 de contrôle de session ayant les capacités requises dans le réseau nominal IMS1.

Le message d'enregistrement est ensuite envoyé du serveur I-CSCF à ce serveur S-CSCF1 de contrôle de session sélectionné, avec l'identifiant du serveur mandataire P-CSCF, l'identité publique et privée de UE2, le nom de contact dans le réseau visité, et si nécessaire le point de contact dans le réseau IMS1. Ce serveur S-CSCF1 de contrôle de session est sélectionné comme étant apte à assurer le contrôle de session correspondant à l'adresse de UE2. Ce serveur S-CSCF1 contrôlera ensuite les appels et sessions de l'équipement mobile UE2.

Suite à la réception du message d'enregistrement, le serveur S-CSCF1 de contrôle de session envoie à la base HSS une requête Cx d'assignation de serveur (SAR, ou en anglais : Cx Server Assignment Request ou Cx-Put), contenant les identités publique et privée de UE2, et également différents types de requêtes (requête du profil complet, de l'état d'enregistrement, etc...). La base HSS enregistre ensuite en association l'identifiant du serveur S-CSCF1 de contrôle de session et l'identité de l'équipement UE2, que lui a envoyés le serveur S-CSCF1 de contrôle de session. Puis la base HSS envoie au serveur S-CSCF1 de contrôle de session dans une réponse d'assignation de serveur (SAA ou en anglais : Server Assignment Answer ou Cx-Pull Resp) le profil de souscription, qui correspond à l'identité de l'équipement UE2. Le serveur S-CSCF1 de contrôle de session enregistre alors ce profil avec l'identité SIP1 de l'équipement UE2 dans une table d'enregistrement. Puis un message d'acquittement connu par le terme 200 OK est envoyé par le serveur S-CSCF2 de contrôle de session à l'équipement UE2, via les serveurs I-CSCF et P-CSCF2 et les noeuds GGSN2 et SGSN2, ce qui fait que l'enregistrement a été effectué avec succès.

A la fin de cette procédure d'enregistrement, le serveur mandataire P-CSCF1 connaît l'adresse IP1 de l'équipement mobile UE2, le serveur S-CSCF1 connaît le serveur mandataire P-CSCF1 sous lequel l'équipement mobile UE2 peut être joint et l'équipement mobile UE2 pourra ainsi établir ou recevoir une session multimédia.

### 1.1.4- Identification de l'abonné

L'équipement mobile UE2 possède deux types d'identités relatives au domaine IMS : une identité privée et une ou plusieurs identités publiques.

L'identité privée est unique pour chaque utilisateur, n'est pas utilisée pour router les messages SIP, est allouée de façon permanente, sert à identifier les informations de l'utilisateur dans le serveur HSS d'abonnés, sert à authentifier l'utilisateur durant son enregistrement, est définie par l'opérateur du réseau nominal et est enregistrée dans le serveur HSS d'abonnés et dans le serveur S-CSCF1, pour chaque équipement enregistré. L'identité privée peut par exemple inclure l'identité internationale IMSI de l'abonné mobile, qui est son numéro d'identification dans le premier réseau.

L'identité publique a le format d'une adresse SIP URL (sous la forme SIP : utilisateur@domaine.net), ce qui est supposé être le cas ci-après, ou d'un numéro de téléphone E.164. Plusieurs identités publiques sont possibles pour un utilisateur. Ces identités ne sont pas utilisées pour l'authentification durant l'enregistrement, mais sont utilisées pour router les messages dans le domaine IMS. Ces identités publiques sont enregistrées dans la base HSS en association avec l'identité privée.

Ayant été enregistré au préalable, le premier équipement UE2 a donc une adresse SIP, désignée ci-après par SIP1 et l'adresse IP1, qui sont enregistrées en association dans la base HSS et dans le serveur S-CSCF1 de contrôle de session.

### 1.1.5- Exemple d'établissement d'une session IMS entre deux abonnés

La figure 2 illustre l'établissement d'une session entre deux abonnés appartenant à un même réseau

La procédure peut être décrite par les étapes suivantes :
1. Pour pouvoir établir une session avec UE2, après son enregistrement auprès du domaine IMS, UE1 envoie le message SIP "Invite" (destiné à l'identité publique du UE2) au P-CSCF1 du réseau visité où il est en roaming ;
**2.** Quand le P-CSCF1 reçoit le message Invite, il le transmet vers le S-CSCF1 où UE1 s'est enregistré ;
**3.** En résolvant le "domain name" envoyé dans le message Invite, le S-CSCF1 transmettra le message Invite vers un I-CSCF2 du réseau de l'équipement UE2 ;
**4.** Le I-CSCF2 interrogera le HSS pour déterminer l'adresse du S-CSCF responsable du UE2 et puis transmet le message Invite vers ce S-CSCF2 ;
5. Ce S-CSCF2 peut demander le contrôle de service et puis route le message Invite vers le P-CSCF2 correspondant d'après les informations stockées dans le S-CSCF2 durant l'enregistrement de UE2 ;
**6.** Le P-CSCF2 transmet le message Invite vers l'adresse IP du UE2 stockée durant l'enregistrement du UE2 ;
7. Après que le UE2 ait reçu le message Invite provenant du UE1; plusieurs messages SIP sont échangés entre ces deux équipements, à travers les différents CSCFs, pour assurer l'établissement de la session IMS. Durant cette phase, les deux UEs négocient les différents paramètres de la session IMS et lorsque UE2 reçoit le message ACK du UE1 indiquant la confirmation de l'ouverture d'une nouvelle session, les deux UEs pourront échanger des données. Si un des UEs désire terminer la session, il envoie le message BYE à l'autre UE et la session sera terminée.

### 2. PRESENTATION DE L'ART ANTERIEUR

### 2.1 Cas d'une session multimédia entrante : « PDP context « Always on » »

Dans la dernière version de la norme (Release 5), si un terminal n'a aucun protocole de données paquets actif (« PDP Context » actif) vers l'IMS, alors le mobile ne pourra pas être joint et ne pourra pas recevoir de sessions entrantes car aucun mécanisme n'a été défini pour permettre l'activation d'un PDP Context par le réseau. En effet, actuellement le seul moyen prévu pour acheminer correctement les sessions multimédia entrantes est d'avoir un PDP Context de signalisation dit "Always On" pour l'échange de la signalisation entre le mobile et l'IMS.

Un PDP Context "Always On" est un PDP Context qui reste activé en permanence même s'il n'est pas utilisé. Cependant, ce PDP Context peut être, si nécessaire, désactivé à n'importe quel moment par le mobile ou le réseau.

L'utilisation des PDP Contexts de signalisation "Always On" dans le cas de l'IMS pour bien acheminer les sessions multimédia entrantes apporte plusieurs avantages :
- un délai minimum pour l'établissement de la session multimédia entrante ;
- le mobile est toujours connecté à l'IMS et prêt à échanger de la signalisation ;
- moins de signalisation sur les équipements du coeur du réseau ;
- un accès plus rapide aux plates-formes de services ;
- une solution simple et non complexe pour les services entrants ("Push services").

Cependant, l'utilisation des PDPs Contexts de signalisation "Always On" présente aussi des inconvénients :
- consommation de la capacité de stockage et de gestion des PDP Contexts dans les entités du réseau coeur (GSNs) ;
- consommation des ressources du réseau (adresse IP) ;
- impacts sur la facturation ;
- impacts sur les situations de Roaming.

Ainsi, malgré tous les avantages de l'utilisation des PDP Contexts "Always On", cette technique présente de nombreux inconvénients pour les opérateurs de réseaux, surtout à cause de la grande consommation de la capacité de stockage et de gestion des PDP Contexts dans les GSNs du réseau coeur. En effet, la capacité de stockage des GSNs en nombre de PDP Contexts simultanés est une contrainte majeure. La solution d'augmenter le nombre de GSNs est très coûteuse pour les opérateurs.

### 2.1 L'activation de PDP Context dans le cas du GPRS

### 2.1.1 La solution « Push Proxy » proposée par RIM

Parmi les solutions proposées dans le cas du GPRS pour l'activation d'un PDP Context à l'initiative du réseau, une solution attractive est le NRPCA (Network Requested PDP Context Activation). Cette solution est proposée par RIM (Research In Motion) au 3GPP dans le cadre de l'élaboration du TR 23.976, dont les aspects utiles à la présente invention sont déjà décrits dans le TR 23.974 (lequel n'a jamais été approuvé par le 3GPP, le TR 23.976 étant en cours d'élaboration).

La solution proposée par RIM se base sur l'utilisation d'un Push Proxy dans le réseau de l'opérateur qui fait l'interface entre l'entité qui initie le message Push et le réseau coeur GPRS de l'opérateur. Un Address Resolver, également situé dans le réseau de l'opérateur, permet au Push Proxy de faire la correspondance entre l'identifiant public reçu de l'extérieur et l'identifiant réseau correspondant pour le terminal visé. Le Push Proxy identifie également si le client a déjà un PDP Context actif et il filtre les requêtes pour éviter que le GGSN soit attaqué par un flux non contrôlé.

### 2.1.2 Introduction au « Push proxy » et « Push Initiator »

Afin de permettre un service entrant, le réseau de l'opérateur inclut un "Push Proxy", tandis que le "Push Initiator" est typiquement sur un réseau externe comme Internet. Le "Push Initiator" initie le service entrant dans le réseau externe et envoie les paquets correspondants au "Push Proxy" dans le réseau de l'opérateur mobile. Ensuite, le "Push Proxy" transmet la requête au réseau Coeur paquet et à l'UE. La fonction "Push Proxy" inclut également des capacités de filtrage afin d'éviter que des "Push Initiators" non autorisés puissant atteindre le réseau Coeur paquet de l'opérateur mobile ou le réseau coeur paquet de l'opérateur mobile. Ceci implique que, dans ce modèle, l'UE fait confiance au "Push Proxy" pour qu'il ne lui envoie pas de paquets entrants non désirés.

### 2.1.1 La solution de RIM ne se transpose pas immédiatement à l'IMS

L'application à l'IMS de la solution NRPCA de RIM n'est pas immédiate dans le cas où le client n'est pas enregistré auprès de l'IMS ; en effet, les fonctions suivantes sont spécifiques à l'IMS et ne sont donc pas décrites par RIM :
- Le choix du P-CSCF par le S-CSCF;
- Le choix du GGSN par le P-CSCF;
- Le lien entre le P-CSCF et l'Address Resolver; en effet, aucune interface n'est prévue entre ces deux entités, ce qui nécessite un comportement spécifique du P-CSCF et du GGSN.

### 3. PRESENTATION DE L'INVENTION

L'introduction du sous-domaine IP Multimédia (IP Multimedia Subsystem - IMS) par les documents normatifs 3GPP précités ouvre la voie à de nouvelles applications multimédia et temps réel. En effet, les opérateurs de réseaux mobiles pourront, grâce à l'IMS, fournir aux clients une large gamme de nouveaux services avancés, qui créent de nouvelles opportunités commerciales.

Un but général de l'invention est de proposer une solution IMS qui permet de remédier aux différents problèmes des "Always On" PDP Contexts, et qui est en outre moins coûteuse.

Notamment, la solution proposée permet de fournir des nouveaux services d'une manière moins coûteuse en termes de ressources du réseau et donc en termes de coût de déploiement.

Il est notamment proposé une solution qui permet l'activation d'un PDP Context de signalisation uniquement lorsqu'il est nécessaire (par exemple dans le cas d'une session multimédia entrante) au lieu d'avoir un PDP Context de signalisation toujours activé.

Ainsi, on adapte la solution NRPCA de RIM dans le contexte de l'IMS.

La solution NRPCA adaptée pour être appliquée à l'IMS permet à un client n'ayant pas un PDP Context de signalisation active de pouvoir recevoir et établir des sessions multimédia entrantes. Ceci est possible puisque cette solution permet à une entité du réseau de pouvoir détecter une situation où il y a une session IMS entrante pour un certain client et ainsi initier une demande d'activation d'un PDP Context de signalisation par le mobile.

Les avantages de cette solution pour les sessions multimédia entrantes sont les suivants :
- Il n'est pas nécessaire d'avoir un PDP Context de signalisation toujours actif.
- Faible consommation des ressources du réseau (adresses IP, capacité des GSNs).
- Une entité du réseau (P-CSCF) contrôle l'initiation d'une session.

Plus précisément, il est proposé un procédé d'établissement d'une session multimédia entre un équipement de télécommunication appelant et un équipement appelé qui est un équipement mobile d'un réseau du type à sous domaine multimédia, dans lequel :
- on émet à partir du premier équipement (UE1) d'utilisateur une invitation (Invite) à établir une session multimédia, qui comporte comme adresse de destination une identité publique du deuxième équipement, cette invitation étant transmise :
   - par le premier équipement (UE1) à un premier serveur Proxy (P-CSF1) puis,
   - de ce premier serveur Proxy, à un premier serveur de contrôle de session (S-CSF1) du réseau dans lequel le premier équipement (UE1) est enregistré, et
   - de ce premier serveur de session (S-CSF1), à un serveur de point d'entrée (I-CSCF2) du réseau correspondant à l'adresse de destination du deuxième équipement (UE2) ;
- ce serveur de point d'entrée (I-CSCF2) interroge une base (HSS2) du réseau du deuxième équipement (UE2) pour obtenir l'adresse d'un serveur de contrôle de session(S-CSF2), responsable dudit deuxième équipement (UE2) ;
- lorsque ledit deuxième équipement (UE2) est enregistré dans ladite base,
   - ledit serveur de point d'entrée (I-CSCF2) transmet le message d'invitation vers le serveur de session (S-CSCF2) sélectionné, et
   - ledit serveur de session (SCSCF2) transmet le message d'invitation vers un serveur Proxy (P-CSCF2) correspondant au deuxième équipement :
      caractérisé en ce que :
      - le serveur Proxy (P-CSCF2) transmet ce message d'invitation, en l'encapsulant dans un paquet IP, vers le deuxième équipement, via un noeud de transit (GGSN) approprié.

Selon un mode de mise en oeuvre :
- le noeud de transit (GGSN) interroge une base de résolution d'adresse (AR) pour convertir l'identité publique du deuxième équipement en un numéro d'identification international d'abonné (IMSI) et pour déterminer en fonction de ce numéro d'identification (IMSI) l'adresse d'un noeud de service (SGSN) desservant ledit deuxième équipement (UE2),
- le noeud de transit (GGSN) transmet audit noeud de service dont dépend le deuxième équipement (SGSN) une requête d'activation de PDP Context de signalisation d'activation de canal de communication multimédia,
- ledit noeud de service (SGSN) dont dépend le deuxième équipement envoie cette requête au deuxième équipement (UE2).

Ce procédé peut être complété par les caractéristiques suivantes, prises seules ou selon toutes leurs combinaisons techniquement possibles :
- lorsque le serveur de point d'entrée (I-CSCF2) questionne la base de données (HSS2) du réseau du deuxième équipement pour déterminer le serveur de contrôle de session (S-CSCF2) responsable de celui-ci et lorsque l'identité publique dudit deuxième équipement (UE2) n'est pas enregistrée dans ladite base, ledit serveur de point d'entrée (I-CSCF2) choisit un serveur de contrôle de session parmi plusieurs serveurs possibles et lui transmet le message d'invitation ;
- le deuxième serveur (S-CSCF2) s'enregistre sur la base de données comme étant le serveur de contrôle de session associé au deuxième équipement mobile ;
- lorsque le deuxième serveur de contrôle de session (S-CSCF2) reçoit le message d'invitation, et que la base de données (HSS2) ne comporte pas de correspondance entre l'identité publique du deuxième équipement et une adresse sur le réseau, le serveur de contrôle de session choisit un serveur Proxy parmi plusieurs possibles ;
   - lorsque le deuxième serveur Proxy (P-CSCF2) reçoit le message d'invitation, et que la base de données (HSS2) ne comporte pas de correspondance entre l'identité publique du deuxième équipement et une adresse sur le réseau, ledit serveur Proxy (P-CSCF2) choisit alors un noeud de transit (GGSN) dans le réseau du deuxième équipement pour lui transmettre le paquet IP en lui donnant une adresse spécifique correspondant audit noeud ;
   - l'adresse spécifique est celle de la base de résolution d'adresse ;
   - lorsque le noeud de transit (GGSN) reçoit ce paquet IP et qu'il détecte cette adresse spécifique, il interroge une base de résolution d'adresse (AR) pour obtenir le numéro d'identification international d'abonné (IMSI) du deuxième équipement, en fonction de l'identité de signalisation de contrôle d'appel (SIP) transmise avec le message d'invitation,
      ledit noeud de transit (GGSN) interrogeant la base de données du réseau (HSS2) pour déterminer en fonction de ce numéro d'identification (IMSI) l'adresse du noeud de service (SGSN) desservant ledit deuxième équipement (UE2)
      le noeud de transit (GGSN) transmet audit noeud de service dont dépend le deuxième équipement (SGSN) une requête d'activation de PDP Context de signalisation d'activation de canal de communication multimédia,
      ledit noeud de service (SGSN) dont dépend le deuxième équipement envoie cette requête au deuxième équipement (UE2) ;
- lorsque la base de résolution d'adresse reçoit le paquet IP, elle renvoie au noeud de transit (GGSN) qui lui correspond le numéro d'identification international d'abonné (IMSI) du deuxième équipement, lequel est fonction de l'identité de signalisation de contrôle d'appel (SIP) transmise avec le message d'invitation,
   ledit noeud de transit (GGSN) interrogeant la base de données du réseau (HSS2) pour déterminer en fonction de ce numéro d'identification (IMSI) l'adresse du noeud de service (SGSN) desservant ledit deuxième équipement (UE2),
   le noeud de transit (GGSN) transmet audit noeud de service dont dépend le deuxième équipement (SGSN) une requête (PDP context) de signalisation d'activation de canal de communication multimédia,
   ledit noeud de service (SGSN) dont dépend le deuxième équipement envoie cette requête au deuxième équipement (UE2) ;

Selon un mode de mise en oeuvre possible :
- le deuxième équipement (UE2) active, avec un noeud de transit éventuellement différent du premier noeud de transit, une procédure de communication multimédia correspondant à la requête qu'il a reçue
   et en ce que :

- le deuxième équipement (UE2) poursuit la procédure en découvrant un serveur Proxy (P-CSCF2'), correspondant éventuellement au deuxième serveur Proxy, puis en s'enregistrant de nouveau auprès du deuxième serveur de contrôle de session (S-CSCF2), ce dernier vérifiant l'acquittement des messages d'invitation à destination du deuxième équipement (UE2) et retransmettant tout message d'invitation non acquitté au deuxième équipement (UE2) conformément au dernier enregistrement reçu et en demandant à l'ancien deuxième serveur Proxy (P-CSF2) d'annuler toute requête en cours.

L'invention concerne en outre un système de communication permettant l'établissement d'une session multimédia entre un équipement de télécommunication appelant et un équipement appelé qui est un équipement mobile d'un réseau du type à sous domaine multimédia, caractérisé en ce que les équipements appelant(s) ou appelé(s) et/ou le ou les serveurs Proxy et/ou le ou les serveurs de session et/ou le ou les serveurs de point d'entrée et/ou le ou les noeuds de service comportent des moyens de traitement pour mettre en oeuvre le procédé précité.

Notamment, dans un mode de réalisation, le réseau comporte au moins un serveur de contrôle de session qui comprend des moyens mémoires dans lesquels sont mémorisés des adresses de serveurs Proxy.

### 4. DESCRIPTION DES FIGURES

L'invention sera mieux comprise à la lecture de la description qui va suivre, donnée uniquement à titre d'exemple non limitatif en référence aux dessins annexés, sur lesquels :
- la figure 1 représente schématiquement une architecture IMS ;
- la figure 2 illustre l'établissement d'une session IMS entre deux abonnés d'un même opérateur ;
- les figures 3 et 4 illustrent deux modes de mise en oeuvre possibles de l'invention.

### 5. DESCRIPTION DE PLUSIEURS MODES DE MISE EN OEUVRE

### 5.1 Mobile enregistré auprès de l'IMS, mais n'ayant pas de PDP Context actif

On suppose ici que l'équipement UE2 de télécommunication mobile de l'autre utilisateur, avec lequel l'équipement UE1 de télécommunication mobile souhaite établir une session, est enregistré auprès du domaine IMS selon la même procédure décrite ci-dessus pour UE1, mais n'a plus de canal de communication de signalisation (PDP Context) établi entre un noeud SGSN et un noeud GGSN du deuxième réseau 2 entre UE2 et le domaine IMS2.

Etant donné que l'équipement UE2 est enregistré auprès du domaine IMS2,
- cet équipement UE2 a déjà obtenu une adresse IP associée (soit IP2 dans ce qui suit) et une adresse SIP associée (soit SIP2 dans ce qui suit), qui sont enregistrées en association dans la base HSS2 et dans le serveur S-CSCF2 de contrôle de session du domaine IMS2,
- l'identifiant du serveur mandataire P-CSCF2 de contrôle de sessions du domaine IMS2 qui sert l'équipement UE2 est connu du serveur S-CSCF2 de contrôle de session, en association avec ses adresses SIP2, IP2,
- l'identifiant du serveur S-CSCF2 de contrôle de session qui sert l'équipement UE2 est connu du serveur HSS2 d'abonnés, en association avec ses adresses SIP2, IP2,

Etant donné que l'équipement UE2 est rattaché auprès du réseau de l'opérateur mobile,
- l'adresse IP du noeud SGSN qui dessert l'équipement UE2 dans le deuxième réseau est connue de la base HSS2, ce noeud étant désigné par SGSN2.

Cet équipement UE2 possède par ailleurs un numéro IMSI, désigné ci-après par IMS12, enregistré dans HSS2, en association avec ses adresses IP2, SIP2.

Le premier équipement UE1 émet une invitation à établir une session entrante, qui comporte une adresse (Invite) de destination, un premier champ (Via) listant les adresses des entités par lesquelles passe l'invitation, une adresse (To) de destination, un deuxième champ (Contact) pour l'adresse à contacter en retour de l'invitation, qui sont ceux indiqués ci-dessous. Le champ Via a pour objectif de prévenir les boucles de routage et de s'assurer que les messages de réponse de la même connexion passent par le même chemin. Cette invitation est un message SIP. Cette invitation est par exemple celle illustrée ci-dessous.

| | |
|---|---|
| **Invite** sip:user2_Public@home2.net SIP/2.0 | Identité publique SIP2 de l'appelé UE2 |
| **Via:** SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en retour |

Bien entendu, l'identité publique de l'équipement UE2 pourrait également être son numéro international E.164.

Au cours d'une première étape E1, l'invitation est envoyée au serveur mandataire P-CSCF1 par le canal PDP1 ayant été établi, via les noeuds associés à UE1 que sont SGSN1 et GGSN1.

Puis, au cours de l'étape E2, le serveur mandataire P-CSCF1 transmet l'invitation indiquée ci-dessous au serveur S-CSCF1 de contrôle de session, où l'équipement UE1 est enregistré d'après ce qui précède.

Pour cela, le serveur mandataire P-CSCF1 ajoute son adresse dans le champ Record - Route (ou route d'enregistrement) de l'invitation, afin que tous les messages appartenant à la session passent par lui. Quand une entité souhaite que tous les messages de la même communication passent par elle, elle ajoute son nom dans l'entête Record - Route.

| | |
|---|---|
| **Invite** sip:user2_Public@home2.net SIP/2.0 | Identité publique SIP2 de l'appelé UE2 |
| **Via:** SIP/2.0/UDP pcscf1.visited.net, SIP/2.0/UDP [5555::aaa:bbb:ccc:ddd]:1357 | Adresse du P-CSCF1, Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en retour |
| **Record - Route:** <sip:pcscf1.visited.net> | Adresse du P-CSCF1 |

Au cours de l'étape suivante E3, le serveur S-CSCF1 détermine, en résolvant le nom de domaine de l'adresse SIP2 (To) de destination, le point d'entrée dans le réseau nominal IMS2 de l'équipement UE2, à savoir le serveur d'interrogation I-CSCF du réseau IMS2, désigné ci-après par le signe de référence I-CSCF2. Puis, le serveur S-CSCF1 transmet l'invitation représentée ci-dessous à ce serveur I-CSCF2.

| | |
|---|---|
| **Invite** sip:user2_Public@home2.net SIP/2.0 | Identité publique SIP2 de l'appelé UE2 |
| **Via:** | |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en |
| | retour |
| **Record - Route:** | |
| <sip:scscf1.home1.net>, | Adresse du S-CSCF1, |
| <sip:pcscf1.visited.net> | Adresse du P-CSCF1 |

Au cours de l'étape suivante E4, le serveur d'interrogation I-CSCF2 demande à la base HSS2 de données de souscription du réseau nominal 2, à partir de l'identité publique de l'équipement UE2 présente dans l'adresse (To) de destination, quelle est l'adresse du serveur S-CSCF de contrôle de session du réseau nominal 2, qui est responsable de l'équipement UE2 ayant cette identité publique.

Comme le deuxième équipement UE2 est déjà enregistré, la base HSS2 répond au serveur I-CSCF2 avec l'adresse du serveur S-CSCF2 de ) contrôle approprié du réseau nominal IMS2, ce serveur S-CSCF2 de contrôle ayant été sélectionné au préalable lors de la procédure d'enregistrement de UE2 comme étant apte à assurer le contrôle de session correspondant à l'adresse de UE2.

A l'étape suivante E5, le serveur d'interrogation I-CSCF2 route l'invitation illustrée ci-dessous vers le serveur de contrôle S-CSCF2 correspondant à cette adresse fournie par la base HSS2.

| | |
|---|---|
| **Invite** sip:user2_Public@home2.net SIP/2.0 | Identité publique SIP2 de l'appelé UE2 |
| **Via:** | |
| SIP/2.0/UDP icscf2.home2.net, | Adresse du I-CSCF2, |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en retour |
| **Record - Route:** | |
| <sip:scscf1.home1.net>, | Adresse du S-CSCF1, |
| <sip:pcscf1.visited.net> | Adresse du P-CSCF1 |

Le deuxième équipement UE2 étant enregistré dans le deuxième réseau nominal IMS2, le serveur de contrôle S-CSCF2 a déjà stocké pendant la procédure d'enregistrement l'adresse IP2 de UE2 et son prochain serveur CSCF associé, qui est le serveur mandataire P-CSCF2.

A l'étape E6 suivant l'étape E5, le serveur de contrôle S-CSCF2 transmet l'invitation illustrée ci-dessous à ce serveur mandataire P-CSCF2, en introduisant l'adresse IP2 de UE2 à la place de son adresse SIP2 dans le champ Invite. L'invitation reçue lors de l'étape E5 par le serveur de contrôle S-CSCF2 est stockée dans celui-ci en association avec l'identité SIP2.

| | |
|---|---|
| **Invite** sip: [5555::eee:fff:ggg:hhh]:1357> SIP/2.0 | Identité publique IP2 de l'appelé UE2 |
| Via: | |
| SIP/2.0/UDP scscf2.home2.net, | Adresse du S-CSCF2, |
| SIP/2.0/UDP icscf2.home2.net, | Adresse du I-CSCF2, |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP: [5555::aaa:bbb:ccc:ddd]:1357> | Adresse IP1 de l'appelant UE1 à contacter en retour |
| **Record - Route:** | |
| <sip:scscf2.home2.net>, | Adresse du S-CSCF2, |
| <sip:scscf1.home1.net>, | Adresse du S-CSCF1, |
| <sip:pcscf1.visited.net> | Adresse du P-CSCF1 |

Quand le serveur mandataire P-CSCF2 reçoit l'invitation, celle-ci, telle que celle illustrée ci-dessous, est encapsulée à l'étape E7 dans un paquet IP dont l'en-tête IP a comme adresse IP de destination celle présente dans le champ Invite de l'invitation, c'est-à-dire l'adresse IP2 de UE2. Le serveur mandataire P-CSCF2 envoie cette invitation dans ce paquet à un noeud GGSN2 de service de transit quelconque du réseau 2 de télécommunication mobile associé à UE2, mais déterminé comme étant approprié. Les serveurs mandataires P-CSCF sont configurés d'avance pour envoyer les invitations qu'ils reçoivent à l'un quelconque parmi une liste de noeuds GGSN de service de transit prédéterminés comme supportant la procédure d'activation de canal de communication de signalisation (Contexte PDP de signalisation) par le réseau. Pour ce faire, les noeuds GGSN de service de transit de cette liste sont ceux d'une version suffisamment évoluée, par exemple postérieure à la version 5.

| | |
|---|---|
| **Invite** sip: [5555::eee:fff:ggg:hhh]:1357> SIP/2.0 | Identité publique IP2 de l'appelé UE2 |
| **Via:** | |
| SIP/2.0/UDP pcscf2.visited1.net, | Adresse du P-CSCF2, |
| SIP/2.0/UDP scscf2.home2.net, | Adresse du S-CSCF2, |
| SIP/2.0/UDP icscf2.home2.net, | Adresse du I-CSCF2, |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en retour |
| **Record - Route:** | |
| <sip:pcscf2.visited1.net>, | Adresse du P-CSCF2, |
| <sip:scscf2.home2.net>, | Adresse du S-CSCF2, |
| <sip:scscf1.home1.net>, | Adresse du S-CSCF1, |
| <sip:pcscf1.visited.net> | Adresse du P-CSCF1 |

Le deuxième noeud GGSN2 de service de transit du deuxième réseau 2 de télécommunication mobile examine à l'étape suivante E8 s'il existe un deuxième canal de communication (PDP Context) entre lui et un noeud SGSN du deuxième réseau 2 de télécommunication mobile pour l'adresse IP2 provenant de l'en-tête IP du paquet encapsulant l'invitation. Etant donné qu'aucun canal de communication (Contexte PDP) n'existe pour le deuxième équipement UE2 dans ce réseau 2 (voir supra), le noeud GGSN2 le constate. Cette constatation fait que le noeud GGSN2 de service de transit :
- extrait du paquet IP reçu l'adresse IP de l'en-tête du paquet, qui est celle IP2 de UE2,
- interroge un module AR de résolution d'adresses pour lui demander quel est le numéro IMSI correspondant à l'adresse IP2 ayant été extraite.

Ce module AR de résolution d'adresses est présent dans le réseau 2 de télécommunication mobile visité associé au deuxième équipement UE2 et est fonctionnellement distinct de la base HSS2 de données de souscription de services. Dans ce module AR de résolution d'adresses sont enregistrées en permanence en association les adresses publiques (au moins celles IP, et éventuellement celles SIP) des équipements de télécommunication mobile du deuxième réseau 2 de télécommunication mobile et leur identité privée, et donc l'adresse publique IP2 et le numéro IMS12, associées au deuxième équipement UE2. Lorsque le canal de communication de signalisation (Contexte PDP de signalisation) est supprimé entre l'équipement UE2 et un noeud GGSN du réseau 2 de télécommunication mobile associé, les identités publiques de cet équipement UE2, telles que son adresse IP et son adresse SIP ne sont pas effacées du module AR de résolution.

Le module AR ayant reçu du noeud GGSN2 l'interrogation, il renvoie à ce dernier le numéro IMSI associé à l'adresse IP2 présente dans cette interrogation, c'est-à-dire le numéro IMSI2.

A l'étape suivante E9, le deuxième noeud GGSN2 de service de transit demande à la base HSS2 de données de souscription, via une interface Gc, l'adresse IP du noeud SGSN de support de service du deuxième réseau 2 de télécommunication mobile qui dessert l'équipement UE2 ayant le numéro IMSI2 d'identification. La base HSS2 de données de souscription répond alors au deuxième noeud GGSN2 de service de transit, via Gc, par l'adresse IP du noeud SGSN2 de support de service du deuxième réseau 2 de télécommunication mobile qui dessert l'équipement UE2 ayant le numéro IMSI2 d'identification, l'association entre cette adresse IP du noeud SGSN2 et le numéro IMSI2 étant préenregistrée dans la base HSS2 lors de la procédure d'attachement préalable de l'équipement UE2. L'étape E9 est effectuée avec les procédures MAP.

Puis, lors de l'étape E10, le deuxième noeud GGSN2 de service de transit envoie à l'adresse IP de ce noeud SGSN2 lui ayant été communiquée à l'étape E9, une notification de paquet entrant, en précisant qu'il s'agit d'un canal de communication de signalisation (Contexte PDP de signalisation), cette notification étant par exemple un message de notification PDU (en anglais PDU Notification Request, PDU étant en anglais Protocol Data Unit, c'est-à-dire unité de données de protocole). Ce message de notification PDU contient le numéro IMS12 de UE2, l'adresse IP2 de UE2, le nom du point d'accès APN correspondant (en anglais : Access Point Name) et le champ IMCN Subsystem Signaling Flag (en anglais : IP Multimedia Core Network Subsystem Signaling Flag) du paramètre PCO (en anglais : Protocol Configuration Option) mis à un pour indiquer qu'il s'agit d'un canal de signalisation.

A l'étape E11 suivante, le noeud SGSN2 de support de service envoie au noeud GGSN2 de service de transit une réponse à la notification de paquet entrant, pour lui indiquer que l'opération se poursuit, cette réponse étant un message de réponse de notification PDU (en anglais : PDU Notification Response).

A l'étape E12 suivante, le noeud SGSN2 de support de service demande au deuxième équipement UE2 de requérir une activation (« Request PDP Context Activation ») de canal de communication de signalisation (Contexte PDP de signalisation).

A l'étape E13 suivante, le deuxième équipement UE2 se réenregistre auprès du réseau nominal IMS2 de la manière suivante.

Le deuxième équipement UE2 active, en utilisant son adresse IP2 déjà allouée, un canal de communication de signalisation (PDP Context for signaling), désigné par le signe de référence PDP2, du noeud SGSN2 de support de service lui ayant envoyé la requête en activation et auquel le deuxième équipement a été attaché, à un noeud GGSN de service de transit du deuxième réseau 2 de télécommunication mobile, qui peut être différent ou identique au noeud GGSN2 et qui est désigné par le signe de référence GGSN2bis.

Puis, la procédure de découverte du serveur mandataire P-CSCF de contrôle de session du deuxième réseau nominal IMS2, décrite ci-dessus pour UE1, est mise en oeuvre pour UE2 à partir du noeud GGSN2bis de service de transit du deuxième réseau 2 de télécommunication mobile, ce qui aboutit à la découverte d'un serveur mandataire P-CSCF2bis de contrôle de session du deuxième réseau nominal IMS2, identique à ou différent du serveur mandataire P-CSCF2 de contrôle de session du deuxième réseau nominal IMS2.

Ensuite, la procédure de réenregistrement du deuxième équipement UE2 est mise en oeuvre dans le deuxième réseau nominal IMS2 en utilisant l'identité de UE2. Etant donné que la base HSS2 de données de souscription du deuxième réseau nominal IMS2 a enregistré lors de l'enregistrement préalable de UE2 (voir supra) l'identifiant du serveur S-CSCF2 de contrôle de session servant cet équipement UE2 en association avec son identité publique SIP2, la requête en réenregistrement est automatiquement transmise à ce même serveur S-CSCF2 de contrôle de session du deuxième réseau nominal IMS2. Par conséquent, le deuxième équipement UE2 sera réenregistré par son ou ses identités, selon la procédure d'enregistrement décrite ci-dessus, dans le deuxième réseau nominal IMS2 auprès de la base HSS2 et du serveur S-CSCF2 de contrôle de session, qui enregistrera alors comme serveur mandataire P-CSCF de renvoi le serveur mandataire P-CSCF2bis de contrôle de session, lequel connaîtra l'adresse IP2 du deuxième équipement UE2 pour l'avoir enregistrée.

Lorsqu'il reçoit cette requête en réenregistrement, le serveur S-CSCF2 de contrôle de session examine si l'identité SIP2 du deuxième équipement UE2 présente dans la requête en réenregistrement est également présente dans sa table d'enregistrement. Etant donné que le deuxième équipement UE2 est déjà enregistré dans ce serveur S-CSCF2 de contrôle de session, l'adresse SIP2 de ce deuxième équipement UE2 est déjà enregistrée dans la table d'enregistrement du serveur S-CSCF2 de contrôle de session et par conséquent le résultat de l'examen est que l'identité SIP2 du deuxième équipement UE2 présente dans la requête en réenregistrement est également présente dans sa table d'enregistrement. Ce résultat fait que le serveur S-CSCF2 de contrôle de session examine s'il existe une invitation qu'il a conservée stockée à l'étape E6 pour l'identité SIP2 du deuxième équipement UE2, présente dans la requête en réenregistrement et si, pour cette invitation stockée, le serveur S-CSCF2 de contrôle de session n'a reçu aucun message OK de la part du deuxième équipement UE2. Si c'est le cas, le serveur S-CSCF2 de contrôle de session renvoie l'invitation stockée au deuxième équipement UE2 en suivant les caractéristiques obtenues lors de la dernière procédure d'enregistrement, via le noeud P-CSCF2bis de service de transit, le noeud GGSN2bis de service et le noeud SGSN2 de support de service.

La session sera ensuite établie.

### 5.2 Mobile non enreaistré dans l'IMS

On suppose que l'équipement UE2 de télécommunication mobile de l'autre utilisateur, avec lequel l'équipement UE1 de télécommunication mobile souhaite établir une session, n'est pas enregistré auprès du domaine IMS et n'a pas de canal de communication de signalisation (PDP Context) établi entre un noeud SGSN et un noeud GGSN du deuxième réseau 2 entre UE2 et le domaine IMS2.

Etant donné que l'équipement UE2 n'est pas enregistré auprès du domaine IMS2 :
- cet équipement UE2 ne possède pas nécessairement d'adresse IP connue dans la base HSS2 et dans les serveurs S-CSCF de contrôle de session du domaine IMS2,
- aucun identifiant de serveur mandataire P-CSCF de contrôle de session du domaine IMS2 qui sert l'équipement UE2 n'est connu des serveurs S-CSCF de contrôle de session du domaine IMS2,
- aucun identifiant de serveur S-CSCF de contrôle de session du domaine IMS2 qui sert l'équipement UE2 n'est connu du serveur HSS2 d'abonnés.

Le deuxième équipement UE2 n'est pas enregistré mais a souscrit des services auprès de la base HSS2 de données de souscription de services du domaine IMS2 auquel ce deuxième équipement UE2 est rattaché selon la procédure d'attachement et d'authentification. Le deuxième équipement UE2 possède donc des services et un profil d'utilisateur dans la base HSS2 de données de souscription, qui y sont connus en association avec l'état non enregistré et l'identité publique SIP2 du deuxième équipement UE2. La procédure relative à l'état non enregistré est décrite par exemple par le document 3GPP TS 23.228 V5.8.0, mentionné ci-dessus, dont la section 5.12 est intégrée par référence ici. L'adresse IP du noeud SGSN2 desservant l'équipement UE2 dans le deuxième réseau 2 est donc connue dans la base HSS2 (il est supposé que l'équipement UE2 a fait la procédure d'attachement radio).

L'équipement UE2 possède par ailleurs un numéro IMSI, désigné ci-après par IMSI2, enregistré dans HSS2.

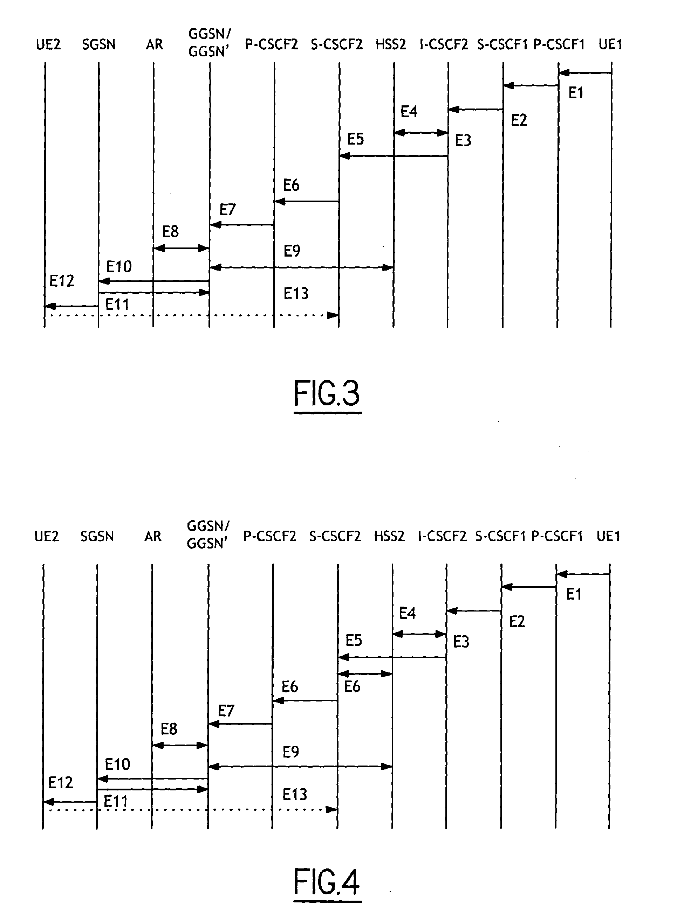

La procédure décrite ci-après est présentée dans la figure 4.

Dans le deuxième mode de réalisation, les étapes E1, E2, E3 décrites ci-dessus sont exécutées.

Après l'étape E3, le serveur d'interrogation I-CSCF2 demande, au cours de l'étape suivante E4, à la base HSS2 de données de souscription du réseau nominal 2, à partir de l'identité publique de l'équipement UE2 présente dans l'adresse (To) de destination, quelle est l'adresse du serveur S-CSCF de contrôle de session du réseau nominal 12, qui est responsable de l'équipement UE2 ayant cette identité publique, c'est-à-dire l'identité publique SIP2.

La base HSS2 répond au serveur I-CSCF2 d'interrogation de choisir un serveur S-CSCF de contrôle approprié du réseau nominal IMS2, c'est-à-dire correspondant aux données des services (par exemple « push ») souscrits par le deuxième équipement UE2 dans la base HSS2 en association avec son identité publique SIP2.

Puis, à l'étape E5, le serveur I-CSCF2 d'interrogation choisit, d'après les caractéristiques de serveur S-CSCF de contrôle reçues à l'étape E4 de la base HSS2, un serveur S-CSCF de contrôle respectant ces caractéristiques dans le réseau nominal IMS2, soit le serveur S-CSCF2bis de contrôle de session, qui sera donc apte à assurer le contrôle de session correspondant à l'adresse de UE2. Le serveur d'interrogation I-CSCF2 détermine l'adresse de ce serveur de contrôle S-CSCF2bis et lui transmet l'invitation illustrée ci-dessous.

| | |
|---|---|
| **Invite** sip:user2_Public@home2.net SIP/2.0 | Identité publique SIP2 de l'appelé UE2 |
| **Via:** | |
| SIP/2.0/UDP icscf2.home2.net, | Adresse du I-CSCF2, |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en retour |
| **Record - Route:** | |
| <sip:scscf1.home1.net>, | Adresse du S-CSCF1, |
| <sip:pcscf1.visited.net> | Adresse du P-CSCF1 |

A l'étape E6 suivant l'étape E5, si le serveur S-CSCF2bis de contrôle de session ne possède pas des données concernant le profil d'utilisateur du deuxième équipement UE2, il les télécharge de la base HSS2. L'invitation reçue lors de l'étape E5 par le serveur de contrôle S-CSCF2bis est stockée dans celui-ci. A l'étape E6, la base HSS2 enregistre le nom du serveur de contrôle S-CSCF2 pour l'identité publique SIP2 du deuxième équipement. Ainsi, toutes les sessions entrantes à destination (To) de l'identité publique SIP2 du deuxième équipement UE2 seront routées vers ce serveur de contrôle S-CSCF2bis. Par ailleurs, cela assure que le deuxième équipement UE2 s'enregistrera par la suite dans ce serveur de contrôle S-CSCF2bis.

Le deuxième équipement UE2 n'étant pas enregistré dans le deuxième réseau nominal IMS2, le serveur de contrôle S-CSCF2bis ne connaît pas l'adresse IP2 de UE2, ni de serveur mandataire P-CSCF dans le réseau 2 pour UE2.

Le serveur de contrôle S-CSCF2bis transmet l'invitation illustrée ci-dessous à un serveur mandataire P-CSCF de contrôle de session approprié du domaine IMS2, soit au serveur mandataire P-CSCF2ter de contrôle de session du domaine IMS2.

| | |
|---|---|
| **Invite** sip:user2_Public@home2.net SIP/2.0 | Identité publique SIP2 de l'appelé UE2 |
| **Via:** | |
| SIP/2.0/UDP scscf2bis.home2.net, | Adresse du S-CSCF2bis, |
| SIP/2.0/UDP icscf2.home2.net, | Adresse du I-CSCF2, |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP: [5555::aaa:bbb:ccc:ddd]:1357> | Adresse IP1 de l'appelant UE1 à contacter en retour |
| **Record - Route:** | |
| <sip:scscf2bis.home2.net>, | Adresse du S-CSCF2bis, |
| <sip:scscf1.home1.net>, | Adresse du S-CSCF1, |
| <sip:pcscf1.visited.net> | Adresse du P-CSCF1 |

Quand le serveur mandataire P-CSCF2ter reçoit l'invitation à l'étape E7 suivante, il ne trouve pas d'adresse IP dans le champ Invite de l'invitation et cherche dans sa propre base de données l'adresse IP de l'équipement UE2, associée à l'identité publique SIP2 présente comme adresse de destination dans le champ Invite de l'invitation.

Mais comme le deuxième équipement UE2 n'est pas enregistré, aucune adresse IP n'est trouvée pour le deuxième équipement UE2 dans sa propre base de données par le serveur mandataire P-CSCF2ter, ce qui fait que le serveur mandataire P-CSCF2ter détecte une situation de session IMS entrante. En cas de détection de situation de session IMS entrante, l'invitation illustrée ci-dessous est encapsulée par le serveur mandataire P-CSCF2ter à l'étape E7 dans un paquet IP dont l'en-tête IP a comme adresse IP de destination une adresse de destination IP spécifique préenregistrée, soit IPS, qui est par exemple celle du module AR de résolution d'adresses du réseau nominal IMS2 de UE2.

Le serveur mandataire P-CSCF2ter envoie cette invitation dans ce paquet lors de l'étape E7 à un noeud GGSN de service de transit quelconque du réseau 2 de télécommunication mobile associé à UE2, mais déterminé comme étant approprié, soit au noeud GGSN2ter de service de transit du réseau 2 de télécommunication mobile associé à UE2. Les serveurs mandataires P-CSCF sont configurés d'avance pour envoyer les invitations qu'ils reçoivent à l'un quelconque parmi une liste de noeuds GGSN de service de transit prédéterminés comme supportant la procédure d'activation de canal de communication de signalisation (Contexte PDP de signalisation) par le réseau. Pour ce faire, les noeuds GGSN de service de transit de cette liste sont ceux d'une version suffisamment évoluée, par exemple postérieure à la version 5.

| | |
|---|---|
| **Invite** sip:user2_Public@home2.net SIP/2.0 | Identité publique SIP2 de l'appelé UE2 |
| **Via:** | |
| SIP/2.0/UDP pcscf2ter.visited1.net, | Adresse du P-CSCF2ter, |
| SIP/2.0/UDP scscf2bis.home2.net, | Adresse du S-CSCF2bis, |
| SIP/2.0/UDP icscf2.home2.net, | Adresse du I-CSCF2, |
| SIP/2.0/UDP scscf1.home1.net, | Adresse du S-CSCF1, |
| SIP/2.0/UDP pcscf1.visited.net, | Adresse du P-CSCF1, |
| SIP/2.0/UDP [5555::aaa:bbb:ccc:ddd]:1357 | Adresse IP1 de l'appelant UE1 |
| **From:** <sip:user1_Public@home1.net> | Identité publique SIP1 de l'appelant UE1 |
| **To:** <user2_Public@home2.net> | Identité publique SIP2 de l'appelé UE2 |
| **Contact:** <SIP; [5555::aaa:bbb:ccc:ddd]:1357> | Adresse IP1 de l'appelant UE1 à contacter en retour |
| **Record - Route:** | |
| <sip:pcscf2ter.visited1.net>, | Adresse du P-CSCF2ter, |
| <sip:scscf2bis.home2.net>, | Adresse du S-CSCF2bis, |
| <sip:scscf1.home1.net>, | Adresse du S-CSCF1, |
| <sip:pcscf1.visited.net> | Adresse du P-CSCF1 |

Le noeud GGSN2 de service de transit du deuxième réseau 2 de télécommunication mobile examine à l'étape suivante E8, si il existe un deuxième canal de communication (PDP Context) entre lui et un noeud SGSN du deuxième réseau 2 de télécommunication mobile pour l'adresse IP, qui provient de l'en-tête IP du paquet encapsulant l'invitation et qui est IPS. Etant donné qu'aucun canal de communication (Contexte PDP) n'existe pour le deuxième équipement UE2 dans ce réseau 2 (voir supra) pour cette adresse IPS, le noeud GGSN2 le constate. Cette constatation fait que le noeud GGSN2 de service de transit :
- extrait du paquet IP reçu l'identité publique contenue dans l'adresse de destination To de l'invitation encapsulée dans ce paquet IP, qui est celle SIP2 de UE2,
- interroge le module AR de résolution d'adresses pour lui demander quel est le numéro IMSI correspondant à l'adresse SIP2 du deuxième équipement UE2, ayant été extraite.

Ce module AR de résolution d'adresses est présent dans le réseau 2 de télécommunication mobile associé au deuxième équipement UE2 et est fonctionnellement distinct de la base HSS2 de données de souscription de services. Dans ce module AR de résolution d'adresses sont enregistrées en permanence en association les adresses publiques (au moins celles SIP, et éventuellement les adresses IP lorsque les adresses IP sont connues) des équipements de télécommunication mobile du deuxième réseau 2 de télécommunication mobile et leur identité privée, et donc l'adresse publique SIP2 et le numéro IMS12, associées au deuxième équipement UE2.

Le module AR ayant reçu du noeud GGSN2 l'interrogation précitée, il renvoie à ce dernier le numéro IMSI associé à l'adresse SIP2 présente dans cette interrogation, c'est-à-dire le numéro IMSI2.

A l'étape suivante E9, le noeud GGSN2 de service de transit demande à la base HSS2 de données de souscription, via une interface Gc, l'adresse IP du noeud SGSN de support de service du deuxième réseau 2 de télécommunication mobile qui dessert l'équipement UE2 ayant le numéro IMSI2 d'identification. La base HSS2 de données de souscription répond alors au noeud GGSN2 de service de transit, via Gc, par l'adresse IP du noeud SGSN2 de support de service du deuxième réseau 2 de télécommunication mobile qui dessert l'équipement UE2 ayant le numéro IMSI2 d'identification, l'association entre cette adresse IP du noeud SGSN2 et le numéro IMSI2 étant préenregistrée dans la base HSS2 lors de la procédure d'attachement préalable de l'équipement UE2. L'étape E9 est effectuée avec les procédures MAP.

Puis, lors de l'étape E10, le noeud GGSN2 de service de transit envoie à l'adresse IP de ce noeud SGSN2 lui ayant été communiquée à l'étape E9, une notification de paquet entrant, en précisant qu'il s'agit d'un canal de communication de signalisation (Contexte PDP de signalisation), cette notification étant par exemple un message de notification PDU. Ce message de notification PDU contient le numéro IMS12 de UE2, un champ d'adresse IP vide, le nom du point d'accès APN correspondant et un champ IMCN mis à un pour indiquer qu'il s'agit d'un canal de signalisation. Le champ d'adresse IP est vide, étant donné que l'adresse IP de UE2 est inconnue et pour qu'une allocation dynamique d'adresse IP soit faite.

A l'étape E11 suivante, le noeud SGSN2 de support de service envoie au noeud GGSN2 de service de transit une réponse à la notification de paquet entrant, pour lui indiquer que l'opération se poursuit, cette réponse étant un message de réponse de notification PDU (en anglais : PDU Notification Response).

A l'étape E12 suivante, le noeud SGSN2 de support de service demande au deuxième équipement UE2 de requérir une activation (« Request PDP Context Activation ») de canal de communication de signalisation (Contexte PDP de signalisation).

A l'étape E13 suivante, le deuxième équipement UE2, ayant reçu du noeud SGSN2 de support de service la demande de requête en activation de canal de communication de signalisation, envoie une requête en activation de canal de communication de signalisation (« PDP Context Activation Request») à ce noeud SGSN2 de support de service.

Dans la requête en activation de canal de communication de signalisation, le deuxième équipement UE2 demande l'allocation dynamique d'une adresse IP en mettant un champ correspondant « adresse PDP » (ou « PDP Adress ») à zéro. L'équipement UE2 renvoie dans ce message l'APN transmis par le SGSN2 à l'étape précédente.

En réponse, le noeud SGSN2 de support de service choisit un noeud GGSN de service de transit du réseau 2, qui peut être différent ou identique au noeud GGSN2 et qui est désigné par le signe de référence GGSN2bis, et procède à la création du canal de communication de signalisation (Contexte PDP) avec ce noeud GGSN2bis de service de transit du réseau 2. Après la création du canal de communication de signalisation, le noeud SGSN2 de support de service envoie à l'équipement UE2 un message d'acceptation d'activation de canal de communication (« Activate PDP Context Accept »), qui contient l'adresse IP allouée à UE2, soit IP2bis. Ce canal de communication (Contexte PDP) sera utilisé pour la signalisation IMS.

Puis, le deuxième équipement UE2 s'enregistre auprès du réseau nominal IMS2 de la manière suivante.

La procédure de découverte du serveur mandataire P-CSCF de contrôle de session du deuxième réseau nominal IMS2, décrite ci-dessus, est mise en oeuvre pour UE2 à partir du noeud GGSN2bis de service de transit du deuxième réseau 2 de télécommunication mobile, ce qui aboutit à la découverte d'un serveur mandataire P-CSCF2bis de contrôle de session du deuxième réseau nominal IMS2, identique à ou différent du serveur mandataire P-CSCF2 de contrôle de session du deuxième réseau nominal IMS2.

Ensuite, la procédure d'enregistrement du deuxième équipement UE2 est mise en oeuvre dans le deuxième réseau nominal IMS2 en utilisant l'identité de UE2. Etant donné que la base HSS2 de données de souscription du deuxième réseau nominal IMS2 a enregistré lors de l'étape précédente E6 (voir supra) l'identifiant du serveur S-CSCF2 de contrôle de session servant cet équipement UE2 en association avec son identité publique SIP2, la requête en enregistrement est automatiquement transmise à ce même serveur S-CSCF2 de contrôle de session du deuxième réseau nominal IMS2. Par conséquent, le deuxième équipement UE2 sera enregistré par son ou ses identités, selon la procédure d'enregistrement décrite ci-dessus, dans le deuxième réseau nominal IMS2 auprès de la base HSS2 et du serveur S-CSCF2 de contrôle de session, qui enregistrera alors comme serveur mandataire P-CSCF de renvoi le serveur mandataire P-CSCF2bis de contrôle de sessions, lequel connaîtra l'adresse IP2bis du deuxième équipement UE2 pour l'avoir enregistrée.

Lorsqu'il reçoit cette requête en enregistrement, le serveur S-CSCF2 de contrôle de session examine si l'identité SIP2 du deuxième équipement UE2 présente dans la requête en enregistrement est également présente dans sa table d'enregistrement.

Etant donné que le deuxième équipement UE2 vient d'être enregistré auprès du domaine IMS2, l'adresse SIP2 de ce deuxième équipement UE2 est déjà enregistrée dans la table d'enregistrement du serveur S-CSCF2 de contrôle de session et par conséquent le résultat de l'examen est que l'identité SIP2 du deuxième équipement UE2 présente dans la requête en enregistrement est également présente dans sa table d'enregistrement. Il s'ensuit que le serveur S-CSCF2 de contrôle de session examine si il existe une invitation qu'il a conservée stockée à l'étape E6 pour l'identité SIP2 du deuxième équipement UE2, présente dans la requête en enregistrement et si, pour cette invitation stockée, le serveur S-CSCF2 de contrôle de session n'a reçu aucun message OK de la part du deuxième équipement UE2. Si c'est le cas, le serveur S-CSCF2 de contrôle de session renvoie l'invitation stockée au deuxième équipement UE2 en suivant les caractéristiques obtenues lors de la dernière procédure d'enregistrement, via le noeud P-CSCF2bis de service de transit, le noeud GGSN2bis de service et le noeud SGSN2 de support de service.

La session sera ensuite établie.

## Revendications

1. Procédé d'établissement d'une session multimédia entre un équipement de télécommunication appelant et un équipement appelé qui est un équipement mobile d'un réseau du type à sous domaine multimédia, dans lequel :
- on émet à partir du premier équipement (UE1) d'utilisateur une invitation (Invite) à établir une session multimédia, qui comporte comme adresse de destination une identité publique du deuxième équipement, cette invitation étant transmise :
- par le premier équipement (UE1) à un premier serveur Proxy (P-CSF1) puis,
- de ce premier serveur Proxy, à un premier serveur de contrôle de session (S-CSF1) du réseau dans lequel le premier équipement (UE1) est enregistré, et
- de ce premier serveur de session (S-CSF1), à un serveur de point d'entrée (I-CSCF2) du réseau correspondant à l'adresse de destination du deuxième équipement (UE2),
- ce serveur de point d'entrée (I-CSCF2) interroge une base (HSS2) du réseau du deuxième équipement (UE2) pour obtenir l'adresse d'un serveur de contrôle de session(S-CSF2), responsable dudit deuxième équipement (UE2),
- lorsque ledit deuxième équipement (UE2) est enregistré dans ladite base :
- ledit serveur de point d'entrée (I-CSCF2) transmet le message d'invitation vers le serveur de session (S-CSCF2) sélectionné, et
- ledit serveur de session (SCSCF2) transmet le message d'invitation vers un serveur Proxy (P-CSCF2) correspondant au deuxième équipement :
**caractérisé en ce que** :
- le serveur Proxy (P-CSCF2) transmet ce message d'invitation, en l'encapsulant dans un paquet IP, vers le deuxième équipement, via un noeud de transit (GGSN) approprié.

2. Procédé selon la revendication 1, **caractérisé en ce que** :
- le noeud de transit (GGSN) interroge une base de résolution d'adresse (AR) pour convertir l'identité publique du deuxième équipement en un numéro d'identification international d'abonné (IMSI) et pour déterminer si ledit deuxième équipement (UE2) a un canal de communication (PDP Context) de signalisation actif, puis interroge la base HSS pour déterminer en fonction de ce numéro d'identification (IMSI) l'adresse d'un noeud de service (SGSN) desservant ledit deuxième équipement (UE2),
- le nceud de transit (GGSN) transmet audit noeud de service (SGSN) dont dépend le deuxième équipement une requête de signalisation d'activation de canal de communication (PDP context) multimédia,
- ledit noeud de service (SGSN) dont dépend le deuxième équipement envoie cette requête au deuxième équipement (UE2).

3. Procédé selon l'une des revendications 1 ou 2, **caractérisé en ce que**, lorsque le serveur de point d'entrée (I-CSCF2) questionne la base de données (HSS2) du réseau du deuxième équipement pour déterminer le serveur de contrôle de session (S-CSCF2) responsable de celui-ci et lorsque l'identité publique dudit deuxième équipement (UE2) n'est pas enregistrée dans ladite base, ledit serveur de point d'entrée (I-CSCF2) choisit un serveur de contrôle de session parmi plusieurs serveurs possibles et lui transmet le message d'invitation.

4. Procédé selon la revendication 3, **caractérisé en ce que** le deuxième serveur (S-CSCF2) s'enregistre sur la base de données comme étant le serveur de contrôle de session associé au deuxième équipement mobile.

5. Procédé selon la revendication 4, **caractérisé en ce que** lorsque le deuxième serveur de contrôle de session (S-CSCF2) reçoit le message d'invitation, et que la base de données (HSS2) ne comporte pas de correspondance entre l'identité publique du deuxième équipement et une adresse sur le réseau, le serveur de contrôle de session choisit un serveur Proxy parmi plusieurs possibles.

6. Procédé selon la revendication 5, **caractérisé en ce que** lorsque le deuxième serveur Proxy (P-CSCF2) reçoit le message d'invitation, et que la base de données (HSS2) ne comporte pas de correspondance entre l'identité publique du deuxième équipement et une adresse sur le réseau, ledit serveur Proxy (P-CSCF2) choisit alors un noeud de transit (GGSN) dans le réseau du deuxième équipement pour lui transmettre le paquet IP en lui donnant une adresse spécifique correspondant audit noeud.

7. Procédé selon la revendication 6, **caractérisé en ce que** l'adresse spécifique est celle de la base de résolution d'adresse.

8. Procédé selon la revendication 6, **caractérisé en ce que**, lorsque le noeud de transit (GGSN) reçoit ce paquet IP et qu'il détecte cette adresse spécifique, il interroge une base de résolution d'adresse (AR) pour obtenir le numéro d'identification international d'abonné (IMSI) du deuxième équipement, en fonction de l'identité de signalisation de contrôle d'appel (SIP) transmise avec le message d'invitation,
ledit nceud de transit (GGSN) interrogeant la base de données du réseau (HSS2) pour déterminer en fonction de ce numéro d'identification (IMSI) l'adresse du noeud de service (SGSN) desservant ledit deuxième équipement (UE2)
le noeud de transit (GGSN) transmet audit noeud de service dont dépend le deuxième équipement (SGSN) une requête (PDP Context) de signalisation d'activation de canal de communication multimédia,
ledit noeud de service (SGSN) dont dépend le deuxième équipement envoie cette requête au deuxième équipement (UE2).

9. Procédé selon la revendication 7, **caractérisé en ce que** lorsque la base de résolution d'adresse reçoit le paquet IP, elle renvoie au noeud de transit (GGSN) qui lui correspond le numéro d'identification international d'abonné (IMSI) du deuxième équipement, lequel est fonction de l'identité de signalisation de contrôle d'appel (SIP) transmise avec le message d'invitation,
ledit noeud de transit (GGSN) interrogeant la base de données du réseau (HSS2) pour déterminer en fonction de ce numéro d'identification (IMSI) l'adresse du noeud de service (SGSN) desservant ledit deuxième équipement (UE2),
le noeud de transit (GGSN) transmet audit noeud de service dont dépend le deuxième équipement (SGSN) une requête (PDP context) de signalisation d'activation de canal de communication multimédia,
ledit noeud de service (SGSN) dont dépend le deuxième équipement envoie cette requête au deuxième équipement (UE2).

10. Procédé selon l'une des revendications précédentes, **caractérisé en ce que** :
- le deuxième équipement (UE2) active, avec un noeud de transit éventuellement différent du premier noeud de transit, une procédure de communication multimédia correspondant à la requête qu'il a reçue ;
et **en ce que** :
- le deuxième équipement (UE2) poursuit la procédure en découvrant un serveur Proxy (P-CSCF2'), correspondant éventuellement au deuxième serveur Proxy, puis en s'enregistrant ou en s'enregistrant de nouveau auprès du deuxième serveur de contrôle de session (S-CSCF2), ce dernier vérifiant l'acquittement des messages d'invitation à destination du deuxième équipement (UE2) et retransmettant tout message d'invitation non acquitté au deuxième équipement (UE2) conformément au dernier enregistrement reçu et en demandant, le cas échéant, à l'ancien deuxième serveur Proxy (P-CSF2) d'annuler toute requête en cours.

11. Procédé selon l'une des revendications précédentes, **caractérisé en ce que** le réseau est de type UMTS.

12. Système de communication permettant l'établissement d'une session multimédia entre un équipement de télécommunication appelant et un équipement appelé qui est un équipement mobile d'un réseau du type à sous-domaine multimédia, **caractérisé en ce que** les équipements appelant(s) ou appelé(s) et/ou le ou les serveurs Proxy et/ou le ou les serveurs de session et/ou le ou les serveur de point d'entrée et/ou le ou les noeuds de service comportent des moyens de traitement pour mettre en oeuvre le procédé selon l'une des revendications précédente.

13. Système selon la revendication 12, **caractérisé en ce que** le réseau comporte au moins un serveur de contrôle de session qui, pour la mise en oeuvre du procédé selon la revendication 5, comprend des moyens mémoires dans lesquels sont mémorisés des adresses de serveurs Proxy.
